(19) Europäisches Patentamt

European Patent Office

Office européen des brevets

(11) Numéro de publication : **0 309 358 B1**

(12) **FASCICULE DE BREVET EUROPEEN**

(45) Date de publication du fascicule du brevet :
**15.01.92 Bulletin 92/03**

(51) Int. Cl.⁵ : **B62D 27/02, B62D 33/04**

(21) Numéro de dépôt : **88402400.1**

(22) Date de dépôt : **23.09.88**

(54) Procédé d'assemblage des panneaux d'une caisse de véhicule et profilé conçu pour la mise en oeuvre de ce procédé.

(30) Priorité : **24.09.87 FR 8713215**

(43) Date de publication de la demande :
**29.03.89 Bulletin 89/13**

(45) Mention de la délivrance du brevet :
**15.01.92 Bulletin 92/03**

(84) Etats contractants désignés :
**DE GB IT NL**

(56) Documents cités :
**EP-A- 0 177 442**
**WO-A-85/05337**
**FR-A- 2 428 201**

(73) Titulaire : **TRIGANO S.A.**
**100 rue Petit**
**F-75019 Paris (FR)**

(72) Inventeur : **Boillot, Dominique**
**26, rue Neuve**
**F-69002 Lyon (FR)**
Inventeur : **Chomel, Guy**
**Le Saint Just Route de Lamastre**
**F-07300 Tournon (FR)**
Inventeur : **Job, Guy**
**Les Queyras**
**F-26800 Etoile/Rhône (FR)**

(74) Mandataire : **Hasenrader, Hubert et al**
**Cabinet BEAU DE LOMENIE 55, rue**
**d'Amsterdam**
**F-75008 Paris (FR)**

Jouve, 18, rue Saint-Denis, 75001 PARIS

EP 0 309 358 B1

## Description

L'invention se rapporte à un procédé d'assemblage à angle droit de panneaux en vue de la réalisation de caisse de véhicules, notamment de caravanes, d'auto-caravanes ou autres habitats légers mobiles ou semi-mobiles.

Un procédé de ce genre est connu par exemple par le brevet EP-A-0177442 et consiste essentiellement à engager les bords de deux panneaux à assembler dans les gorges d'un profilé qui s'ouvrent suivant des directions orthogonales.

Par ce brevet européen, on connaît également un profilé d'assemblage à angle droit de panneaux en vue de réaliser une caisse de véhicule. Ce profilé susceptible d'être utilisé pour la mise en oeuvre du procédé défini ci-dessus, comporte deux gorges semblables de section en U, orientées à 90° l'une par rapport à l'autre, destinées à recevoir les bords de deux panneaux à assembler, qui comportent des bords de section rectangulaire, et délimitées chacune par un fond plan et par deux ailes qui sont parallèles entre elles et perpendiculaires à ce fond, et espacées l'une de l'autre d'une distance égale ou légèrement supérieure à l'épaisseur du panneau qui doit s'y engager, le profilé comportant en outre une membrure de rigidification reliant les fonds des deux gorges à l'extérieur de celles-ci.

Le document EP-A-0177442, correspondant aux préambules des revendications 1 et 4, ne révèle pas de quelle manière est fixé le bord d'un panneau au profilé.

Par contre, le document WO-A-8505337 recommande la fixation du bord du panneau à un profilé par collage à l'aide d'un adhésif liquide ou sous forme de ruban solide disposé entre les ailes de la gorge et les bords du panneau. Toutefois, la gorge du profilé destinée à recevoir le bord du panneau comporte une aile solidaire du profilé et une aile rapportée provenant d'une pièce complémentaire que l'on fixe au profilé à l'aide de boulons après avoir positionné le bord du panneau contre l'aile solidaire du profilé, ce qui se traduit par des coûts de main d'oeuvre supplémentaire et un volume plus encombrant du profilé.

Il a été constaté que dans le cas de gorges délimitées par deux ailes solidaires l'une et l'autre du profilé, il est difficile d'assurer la fixation entre le profilé et le panneau dont le bord est introduit dans la gorge à l'aide d'un adhésif pâteux ou liquide. En effet, le dosage de l'adhésif nécessaire à la fixation du bord du panneau à l'intérieur de la gorge du profilé est souvent imprécis. Pour éviter qu'il y ait un manque d'adhésif dans la gorge, on a tendance à prévoir un excédent d'adhésif. De ce fait, une quantité d'adhésif pâteux ou liquide est expulsée de la gorge lors de l'introduction du bord du panneau et se dépose d'une façon irrégulière sur le panneau à proximité du profilé en donnant à la liaison un aspect de mauvaise finition.

Un premier but de la présente invention est de proposer un procédé d'assemblage de panneaux qui pallie les inconvénients cités.

Ce premier but est atteint selon l'invention par le fait que tout en se basant sur le procédé initialement proposé et utilisant un profilé comportant deux gorges semblables de section en U, orientées à 90° l'une par rapport à l'autre et délimitées chacune par un fond plan et deux ailes qui sont solidaires du profilé, parallèles entre elles et perpendiculaires au fond correspondant, on dépose sur le bord du panneau et/ou dans la gorge correspondante du profilé un adhésif liquide ou pâteux en une quantité légèrement supérieure à la quantité strictement nécessaire pour remplir le faible intervalle subsistant entre la surface interne de la gorge et la surface correspondante du bord du panneau une fois fixé au profilé et qu'on prévoit sur la face interne d'au moins une aile de la gorge et près de l'extrémité de cette aile un évidement tampon s'étendant parallèlement à ladite gorge et destiné à piéger la quantité d'adhésif en excès qui a tendance à être expulsée de la gorge au moment de l'introduction du bord du panneau.

Grâce à cette disposition, on évite les bavures de colle au moment de l'assemblage. En outre, ce procédé assure qu'il y a un collage parfait entre le bord du panneau et le profilé. De préférence, on piège la quantité d'adhésif en excès du côté de l'aile externe du profilé. On peut également piéger la colle en excès du côté de l'aile interne près de l'extrémité libre de celle-ci.

La présente invention concerne également un profilé du type initialement mentionné.

Le profilé connu de ce type comporte entre les ailes internes du profilé un listel de rigidification qui, en outre, sert à la fixation d'organes d'accrochages. De ce fait, l'espace délimité par les ailes internes et le listel est rendu inaccessible à d'autres usages notamment au stockage d'organes de distribution tels que fils électriques, conduites d'eau, etc.

La présente invention a pour deuxième but de pallier ces inconvénients et de proposer un profilé d'assemblage qui, non seulement se prête à la mise en oeuvre du procédé selon l'invention, mais qui présente également une grande rigidité tout en permettant l'accès de l'espace délimité entre les ailes internes dudit profilé.

Ce deuxième but est atteint conformément à l'invention du fait que au moins l'une des deux ailes délimitant l'une des deux gorges du profilé comporte sur sa face interne et près de son extrémité libre une rainure longitudinale parallèle à ladite gorge et servant de piège à colle, et que la membrure de rigidification reliant les fonds des deux gorges, à l'extérieur de celles-ci, présente un élément tubulaire s'étendant parallèlement aux gorges et formant un canal de section circulaire s'ouvrant vers l'extérieur du profilé par une fente rectiligne étroite et parallèle auxdites gorges.

Grâce à cette conception, le profilé comporte non seulement un piège à colle pour capter la quantité de colle en excès lors de l'assemblage des panneaux et garantissant un passage sans bavure entre l'extrémité des ailes externes et/ou internes et la face intérieure et/ou extérieure d'un panneau, mais présente aussi une rigidité accrue ce qui permet d'utiliser des profilés à paroi de faible épaisseur et de donner libre accès à l'espace situé entre les ailes internes du profilé.

Le canal de section circulaire s'ouvrant vers l'extérieur peut être avantageusement utilisé pour recevoir un jonc d'attache d'une toile d'auvent ou une toile de bavette. En outre, les extrémités libres des ailes internes peuvent être munies de bordures longitudinales repliées en retour et orientées l'une vers l'autre dans un même plan oblique, et l'ouverture subsistant entre les deux bordures longitudinales peut être recouverte par une bande ou une lame rigide ou semi-rigide servant à cacher le volume délimité entre lesdites ou les internes et lesdites bordures longitudinales.

Le volume délimité entre lesdites ailes et lesdites bordures longitudinales peut ainsi être avantageusement utilisé pour le passage de fils électriques, de conduites d'eau ou de gaz et ce volume est accessible.

Le plan du fond de l'une des gorges du profilé peut être compris entre les plans des ailes de l'autre gorge. Dans ce cas, on peut prévoir que le plan de l'une des ailes de la gorge dont le fond a son plan compris entre les plans des ailes de l'autre gorge soit confondu avec le plan du fond de ladite autre gorge.

Ceci permet en particulier de disposer les parois verticales de la caisse de véhicule au moins en partie au-dessus du plancher de ladite caisse.

En variante, le plan de l'une des ailes de chaque gorge peut être confondu avec le plan du fond de l'autre gorge, tandis que ladite aile de chaque gorge s'étend dans le prolongement du fond de l'autre gorge.

La membrure peut s'étendre, au moins en partie, soit obliquement par rapport aux plans des ailes des gorges, soit dans le plan de l'une des ailes de l'une des gorges.

Afin d'améliorer les qualités d'isolation thermique d'une caisse dont les panneaux sont assemblés à l'aide de profilés, selon l'invention, il convient de remplir l'espace compris entre les deux fonds et la membrure de chaque profilé d'un matériau thermiquement isolant.

Selon une autre caractéristique du profilé selon l'invention, les deux ailes qui, appartenant respectivement à l'une et à l'autre des gorges, sont contiguës, sont aménagées pour permettre la fixation de divers éléments au profilé. Une telle disposition permet de fixer ces éléments, à l'intérieur de la caisse, aux profilés, et non pas aux panneaux qui offrent une moindre résistance mécanique.

L'invention permet ainsi de réaliser des caisses de véhicules non pas à l'aide de panneaux pourvus d'une ossature et assemblés par vissage dans les ossatures des panneaux adjacents, mais à l'aide de panneaux du type sandwich, de structure simple et homogène, assemblés par collage sur des profilés de liaison dans lesquels leurs bords sont emboîtés. Ce dernier mode d'assemblage offre de nombreux avantages : souplesse de mise en oeuvre, précision d'appareillage des panneaux, étanchéité à leurs jonctions, facilité de réalisation de passages de câbles et d'obtention de points de fixation pour meubles ou cloisons, etc.

D'autres caractéristiques et avantages de l'invention ressortiront plus clairement de la description qui va suivre, en regard des dessins annexés, d'un exemple de réalisation non limitatif.

La figure 1 représente schématiquement, en élévation latérale, le contour d'une caisse de caravane réalisée conformément à l'invention et vue suivant la flèche I de la figure 2.

La figure 2 représente, à échelle agrandie, une section suivant la ligne II-II de l'objet de la figure 1.

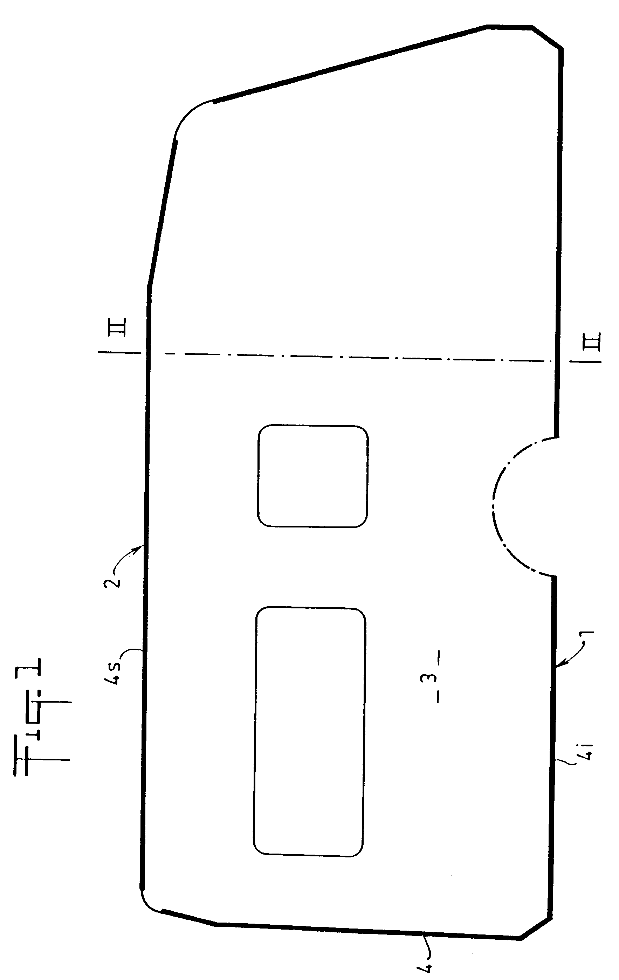

La caisse de caravane représentée à la figure 1 comprend des panneaux formant le plancher 1, le toit 2, chaque face latérale 3 ainsi que les traces frontales avant et arrière. Ces panneaux, qui offrent une structure sandwich, sans ossature de rigidification, sont assemblés au moyen de profilés 4 répartis sur le pourtour de chaque face latérale 3 de la caisse.

Les panneaux sont constitués de préférence par trois plaques liées entre elles par collage : une plaque externe rigide en matière plastique ou en tôle d'aluminium, une plaque intermédiaire en matériau isolant et une plaque interne de revêtement.

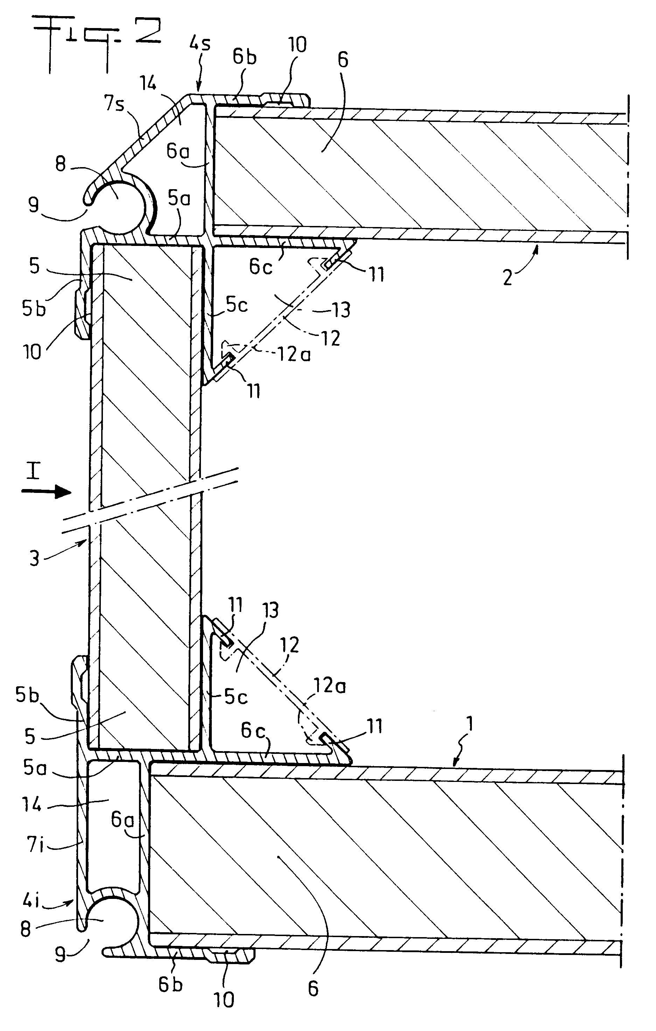

Les profilés 4, qui peuvent être réalisés en alliage d'aluminium ou en polyester armé, présentent deux structures légèrement différentes suivant qu'il s'agit de profilés supérieurs 4s pour assemblage de panneaux de toit 2 ou de profilés inférieurs 4i pour assemblage de panneaux de plancher 1 (figure 2). Chaque profilé 4s ou 4i comporte une paire de gorges 5, 6 s'ouvrant dans des directions perpendiculaires. Chacune de ces gorges, de section rectangulaire adaptée à l'épaisseur du bord du panneau 1, 2 ou 3 qu'elle est destinée à recevoir, est délimitée par un fond plan 5a, 6a et deux ailes 5b, 5c, 6b, 6c s'étendant parallèlement entre elles et perpendiculaire au fond respectif 5a, 6a.

Les fonds 5a, 6a des gorges 5, 6 de chaque profilé 4s, 4i sont reliés entre eux, sur leurs faces dorsales situées à l'opposé des gorges par une membrure mince de rigidification faisant partie intégrante du profilé. La membrure 7s du profilé 4s d'assemblage du panneau de toit 2 s'étend suivant une direction générale oblique par rapport à chacun des plans des fonds 5a, 6a de ce profilé. Vue en section transversale, cette membrure 7s peut s'étendre en ligne droite ou plus ou moins courbe, concave ou convexe. La membrure 7i du profilé 4i d'assemblage du panneau de plancher 1 s'étend, par sa plus grande partie, dans le plan de l'aile extérieure 5c de la gorge 5 destiné à recevoir le panneau latéral 3. Cette conformation différente des membrures 7s, 7i est liée au fait que, dans le profilé supérieur 4s, le fond 6a de la gorge 6 recevant le panneau de toit 2 s'étend dans le plan de l'aile intérieure 5c de l'autre gorge 5, le plan dudit fond 5a étant donc éloigné de celui de l'aile extérieure 5b de cette dernière gorge. Par contre, dans le cas du profilé inférieur 4i, le fond 6a étant donc éloigné de celui de l'aile extérieure 5b de cette dernière gorge. Par contre, dans le cas du profilé inférieur 4i, le fond 6a de la gorge 6 recevant le panneau de plancher 1, plus épais que les autres panneaux, est décalé par rapport à l'aile intérieure 5c de l'autre gorge 5, puisqu'il s'étend dans un plan situé sensiblement à égale distance des plans des ailes 5b, 5c de la gorge 5, donc plus proche de l'aile 5b que le fond 6a de l'aile 5b du profilé supérieur 4s.

Chacune des membrures de rigidification 7s, 7i est conformée de façon à offrir un logement 8 en forme de canal longitudinal de section circulaire s'ouvrant vers l'extérieur par une étroite fente longitudinale 9. Le logement 8 peut recevoir un jonc d'attache d'une toile d'auvent au profilé supérieur 7s ou de bavette au profilé inférieur 7i. Le logement 8 est disposé de préférence près de l'aile externe inférieure (5b, 6b) du profilé 4.

L'assemblage des panneaux 1, 2, 3 à l'aide des profilés 4i, 4s est réalisé par collage. Après avoir enduit d'une couche d'adhésif la surface du bord des panneaux par laquelle celui-ci sera en contact avec le fond et les ailes de la gorge qui doit le recevoir, et/ou toute la surface interne de ladite gorge, on engage le panneau dans la gorge. Après quoi, le durcissement de la fine couche d'adhésif formée entre les trois faces de la gorge et le panneau assure une liaison solide et définitive de celui-ci au profilé. Comme on peut le voir sur la figure 2, les ailes extérieures 5b, 6b des profilés sont pourvues, sur leur face interne, c'est-à-dire la face voisine du panneau 1, 2 ou 3, d'une rainure longitudinale 10 formant une poche de réserve d'adhésif. D'une façon générale, les ailes intérieures 5c, 6c peuvent également être munies, sur leur face externe, c'est-à-dire de la face voisine du panneau 1, 2 ou 3, d'une rainure longitudinale 10 formant également poche de réserve d'adhésif.

Les ailes intérieures 5c, 6c des profilés, qui s'étendent sur une longueur égale à partir de leur intersection, sont dotées, à leur extrémité libre, de bordures terminales 11 repliées à angle vif l'une vers l'autre, dans un même plan perpendiculaire au plan bissecteur desdites ailes. Ces bordures constituent des organes de fixation pour des éléments divers à l'intérieur de la caisse formée par les panneaux 1, 2, 3,... assemblés, notamment pour des meubles ou des cloisons de séparation. On peut aussi y fixer des bandes 12 reliant lesdites bordures l'une à l'autre, auxquelles elles s'attachent par des crochets déformables 12a. Ces bandes forment, avec les ailes 5c, 6c, des conduits 13 par où peuvent être passés par exemple des câbles électriques.

On remarque que les profilés, dans leurs deux versions référencées 4s, 4i, offrent intérieurement un espace fermé 14 entre les faces dorsales des fonds 5a, 6a et la membrure 7s ou 7i. Il peut être utile, pour minimiser les fuites de chaleur à travers les parois de la caisse au niveau des profilés d'assemblage des panneaux qui la composent, de remplir cet espace d'une mousse de matière isolante.

## Revendications

1. Procédé d'assemblage à angle droit de panneaux en vue de la réalisation de caisses de véhicules, notamment de caravanes, selon lequel on assemble les bords de deux panneaux (1, 3 ; 2, 3) perpendiculaires l'un à l'autre à l'aide d'un profilé (4s, 4i), qui s'ouvrent suivant des directions orthogonales, et on utilise ledit profilé (4s, 4i) comportant deux gorges semblables (5, 6) de section en U, orientées de 90° l'une par rapport à l'autre et délimitées chacune par un fond plan (5a, 6a) et deux ailes (5b, 5c et 6b, 6c) qui sont solidaires dudit profilé (4s, 4i), parallèles entre elles et perpendiculaires au fond de gorge correspondant (5a, 6a), caractérisé en ce que l'on dépose sur le bord du panneau (1, 3, 2) et/ou dans la gorge (5, 6) correspondante du profilé (4s, 4i) un adhésif liquide ou pâteux en une quantité légèrement supérieure à la quantité strictement nécessaire pour remplir le faible intervalle subsistant entre la surface interne de la gorge (5, 6) et la surface correspondante du bord du panneau (1, 2, 3), et en ce que l'on prévoit sur la face interne d'au moins une aile (5b, 5c et 6b, 6c) de la gorge (5, 6) et près de l'extrémité de cette aile un évidement tampon (10) s'étendant parallèlement à ladite gorge (5, 6) et destiné à piéger la quantité d'adhésif en excès qui a tendance à être expulsée de la gorge (5, 6) au moment de l'introduction du bord du panneau (1, 3, 2).

2. Procédé selon la revendication 1, caractérisé en ce qu'on piège la quantité d'adhésif en excès du côté de l'aile externe (5b, 6b) du profilé (4s, 4i).

3. Procédé selon l'une des revendications 1 ou 2, caractérisé en ce qu'on piège la quantité d'adhésif en excès du côté de l'aile interne (5c, 6c) près de l'extrémité libre de celle-ci.

4. Profilé d'assemblage à angle droit de deux panneaux en vue de réaliser une caisse de véhicule, conçu pour la mise en oeuvre du procédé selon l'une des revendications 1 à 3, comportant deux gorges (5, 6) semblables de section en U, orientées à 90° l'une par rapport à l'autre, destinées chacune à recevoir le bord de l'un des deux panneaux (1, 3 ; 2, 3) à assembler, délimitées chacune par un fond plan (5a, 6a) et par deux ailes (5b, 5c, 6b, 6c) qui sont solidaires du profilé (4i, 4s), parallèles entre elles, et perpendiculaires à ce fond (5a, 6a), espacées l'une de l'autre d'une distance égale ou légèrement supérieure à l'épaisseur du panneau qui doit s'y engager et comportant une membrure de rigidification (7s, 7i) reliant les fonds (5a, 6a) des deux gorges (5, 6) à l'extérieur de celles-ci, caractérisé en ce qu'au moins l'une des deux ailes (5b, 5c, 6b, 6c) délimitant l'une des deux gorges (5, 6) du profilé (4i, 4s) comporte sur sa face interne et près de son extrémité libre une rainure longitudinale (10) parallèle à ladite gorge (5, 6) et servant de piège à colle, et en ce que la membrure de rigidification (7s, 7i) présente un élément tubulaire (8) s'étendant parallèlement aux gorges (5, 6) et formant un canal de section circulaire s'ouvrant vers l'extérieur du profilé (4i, 4s) par une fente rectiligne étroite (9) parallèle auxdites gorges (5, 6).

5. Profilé selon la revendication 4, caractérisé en ce que les extrémités libres des ailes internes (5c, 6c) sont munies de bordures longitudinales (11) repliées en retour et orientées l'une vers l'autre dans un même plan oblique.

6. Profilé selon la revendication 5, caractérisé en ce que l'ouverture subsistant entre les deux bordures longitudinales (11) est recouverte par une bande ou une lame (12) rigide ou semi-rigide servant à cacher le volume délimité entre lesdites ailes (5c, 6c) et lesdites bordures (11).

7. Profilé selon l'une des revendications 4 à 6, caractérisé en ce que le plan du fond (6a) de l'une des gorges est compris entre les plans des ailes (5b, 5c) de l'autre gorge.

8. Profilé selon la revendication 7, caractérisé en ce que le plan de l'une des ailes de la gorge (6) dont le fond (6a) a son plan compris entre les plans des ailes (5b, 5c) de l'autre gorge (5) est confondu avec le plan du fond (5a) de ladite autre gorge.

9. Profilé selon l'une des revendications 4 à 6, caractérisé en ce que le plan de l'une des ailes (5c, 6c) de chaque gorge (5, 6) est confondu avec le plan du fond (6a, 5a) de l'autre gorge (6, 5) et que ladite aile (5c, 6c) de chaque gorge s'étend dans le prolongement du fond (6a, 5a) de l'autre gorge.

10. Profilé selon l'une des revendications 4 à 9, caractérisé en ce que la membrure (7s) s'étend, au moins en partie, obliquement en ligne droite ou courbe par rapport aux plans des ailes des gorges (5, 6).

11. Profilé selon l'une des revendications 4 à 10, caractérisé en ce que la membrure (7i) s'étend, au moins en partie, dans le plan de l'une des ailes de l'une des gorges.

12. Profilé selon l'une quelconque des revendications 4 à 11, caractérisé en ce que l'espace (14) compris entre les deux fonds (5a, 6a) et la membrure (7s, 7i) est rempli d'un matériau thermiquement isolant.

13. Profilé selon l'une quelconque des revendications 4 à 12, caractérisé en ce que les deux ailes (5c, 6c) qui, appartenant respectivement à l'une et à l'autre des gorges (5, 6), sont contiguës, sont aménagées pour permettre la fixation de divers éléments au profilé (4i, 4s).

**Patentansprüche**

1. Verfahren zur Montage von Paneelen im rechten Winkel für die Herstellung von Fahrzeugkästen, insbesondere von Wohnanhänger-Kästen, gemäß dem die Kanten zweier Paneele (1, 3 ; 2, 3) mit Hilfe eines Profils (4s, 4i), das in zueinander senkrechten Richtungen geöffnet ist, senkrecht zueinander montiert werden und das Profil (4s, 4i) verwendet wird, das zwei ähnliche Nuten (5, 6) mit U-förmigem Querschnitt umfaßt, die mit 90° zueinander orientiert sind und jeweils von einem ebenen Boden (5a, 6a) und zwei Schenkeln (5b, 5c und 6b, 6c), die mit dem Profil (4s, 4i) einteilig ausgebildet sind und zueinander parallel und zum entsprechenden Boden der Nut (5a, 6a) senkrecht sind, begrenzt werden, dadurch gekennzeichnet, daß auf der Kante des Paneels (1, 3, 2) und/oder in der entsprechenden Nut (5, 6) des Profils (4s, 4i) ein flüssiger oder pastenartiger Klebstoff in einer Menge aufgebracht wird, die etwas größer als diejenige Menge ist, die für die Füllung des kleinen Abstandes zwischen der Innenfläche der Nut (5, 6) und der entsprechenden Oberfläche der Kante des Paneels (1, 2, 3) unbedingt notwendig ist, und daß auf der Innenseite wenigstens eines Schenkels (5b, 5c und 6b, 6c) der Nut (5, 6) und in der Nähe des Endes dieses Schenkels eine Auffangaussparung (10) vorgesehen ist, die sich parallel zur Nut (5, 6) erstreckt und dazu vorgesehen ist, die überschüssige Klebstoffmenge aufzufangen, für die die Neigung besteht, beim Einschieben der Kante des Paneels (1, 3, 2) aus der Nut (5, 6) herausgedrückt zu werden.

2. Verfahren gemäß Anspruch 1, dadurch gekennzeichnet, daß die überschüssige Klebstoffmenge auf der Seite des äußeren Schenkels (5b, 6b) des Profils (4s, 4i) aufgefangen wird.

3. Verfahren gemäß einem der Ansprüche 1 oder 2, dadurch gekennzeichnet, daß die überschüssige Menge des Klebstoffs auf der Seite des inneren Schenkels (5c, 6c) in der Nähe des freien Endes desselben aufgefangen wird.

4. Profil zur Montage zweier Paneele im rechten Winkel zur Herstellung eines Fahrzeugkastens, das für die Ausführung des Verfahrens gemäß einem der Ansprüche 1 bis 3 vorgesehen ist, das zwei ähnlichen Nuten (5, 6) mit U-förmigem Querschnitt umfaßt, die mit 90° zueinander orientiert sind, die jeweils dazu vorgesehen sind, die Kante eines der zwei zu montierenden Paneele (1, 3 ; 2, 3) aufzunehmen und die jeweils von einem ebenen Boden (5a, 6a) und zwei Schenkeln (5b, 5c, 6b, 6c) begrenzt werden, welche einteilig mit dem Profil (4i, 4s) ausgebildet, zueinander parallel und zu diesem Boden (5a, 6a) senkrecht orientiert sind und sich in einem gegenseitigen Abstand befinden, der gleich oder etwas größer als die Dicke des Paneels, das in sie eingreifen soll, ist, und das einen Versteifungsspant (7s, 7i) umfaßt, der die Böden (5a, 6a) der zwei Nuten (5, 6) außerhalb dieser verbindet, dadurch gekennzeichnet, daß wenigstens einer der zwei Schenkel (5b, 5c, 6b, 6c), der eine der Nuten (5, 6) des Profils (4i, 4s) begrenzt, an seiner Innenseite und in der Nähe seines freien Endes eine längliche Rinne (10) aufweist, die zu der Nut (5, 6) parallel ist und als Klebstoffauffang dient, und daß das Versteifungsspant (7s, 7i) ein röhrenförmiges Element (8) aufweist, das sich parallel zu den Nuten (5, 6) erstreckt und einen Kanal mit kreisförmigem Querschnitt bildet, der über einen zu den Nuten (5, 6) parallelen, geradlinigen, schmalen Schlitz (9) zur Außenseite des Profils (4i, 4s) geöffnet ist.

5. Profil gemäß Anspruch 4, dadurch gekennzeichnet, daß die freien Enden der inneren Schenkel (5c, 6c) mit in Längsrichtung sich erstreckenden Rändern (11) versehen sind, die zurückgebogen sind und in derselben schrägen Ebene aufeinander zu weisen.

6. Profil gemäß Anspruch 5, dadurch gekennzeichnet, daß die Öffnung zwischen den zwei in Längsrichtung orientierten Kanten (11) von einem starren oder halbstarren Band oder Plättchen (12) abgedeckt ist, das dazu dient, das zwischen den Schenkeln (5c, 6c) und den Rändern (11) begrenzte Volumen abzudecken.

7. Profil gemäß einem der Ansprüche 4 bis 6, dadurch gekennzeichnet, daß die Ebene des Bodens (6a) einer der Nuten zwischen den Ebenen der Schenkel (5b, 5c) der anderen Nut liegt.

8. Profil gemäß Anspruch 7, dadurch gekennzeichnet, daß die Ebene eines der Schenkel der Nut (6), dessen Bodenebene (6a) zwischen den Ebenen der Schenkel (5b, 5c) der anderen Nut (5) liegt, mit der Ebene des Bodens (5a) der anderen Nut zusammenfällt.

9. Profil gemäß einem der Ansprüche 4 bis 6, dadurch gekennzeichnet, daß die Ebene eines der Schenkel (5c, 6c) einer jeden Nut (5, 6) mit der Ebene des Bodens (6a, 5a) der anderen Nut (6, 5) zusammenfällt und daß sich der Schenkel (5c, 6c) einer jeden Nut in der Verlängerung des Bodens (6a, 5a) der anderen Nut erstreckt.

10. Profil gemäß einem der Ansprüche 4 bis 9, dadurch gekennzeichnet, daß sich das Spant (7s) wenigstens zum Teil geradlinig oder gekrümmt schräg zu den Ebenen der Schenkel der Nuten (5, 6) erstreckt.

11. Profil gemäß einem der Ansprüche 4 bis 10, dadurch gekennzeichnet, daß sich das Spant (7i) wenigstens zum Teil in der Ebene eines der Schenkel einer der Nuten erstreckt.

12. Profil gemäß einem der Ansprüche 4 bis 11, dadurch gekennzeichnet, daß der Raum (14) zwischen den zwei Böden (5a, 6a) und dem Spant (7s, 7i) mit einem wärmeisolierenden Material gefüllt ist.

13. Profil gemäß einem der Ansprüche 4 bis 12, dadurch gekennzeichnet, daß die zwei Schenkel (5c, 6c), die der einen bzw. der anderen Nut (5, 6) zugehören und aneinandergrenzen, so angeordnet sind, daß sie die Befestigung verschiedener Elemente des Profils (4i, 4s) erlauben.

## Claims

1. Process for right-angle assembly of panels with a view to producing vehicle bodies, notably caravan bodies, consisting in assembling the edges of two perpendicular panels (1, 3 ; 2, 3) by means of a structural section (4s, 4i), opening in two orthogonal directions, and in using said structural section (4s, 4i) comprising two similar U-section grooves (5, 6) oriented so as to form an angle of 90° one with respect to the other and each one being delimited by a bottom plane (5a, 6a) and two flanges (5b, 5c and 6b, 6c), said flanges being fast with said structural section (4s, 4i), parallel together and perpendicular to the corresponding groove bottom (5a, 6a), characterized in that a liquid or pasty adhesive is deposited on the edge of the panel (1, 2, 3) and/or in the corresponding groove (5, 6) to the structural section (4s, 4i) in a slightly greater quantity than the quantity strictly required to fill the small gap remaining between the inner surface of the groove (5, 6) and the corresponding surface of the edge of the panel (1, 2, 3), and in that a sealing recess (10) extending in parallel to said groove (5, 6) is provided on the inner face of at least one flange (5b, 5c and 6b, 6c) of the groove (5, 6) and near the end of said flange, said sealing recess being intended to trap the excess quantity of adhesive which tends to be expelled from the groove (5, 6) upon introduction of the edge of the panel (1, 3, 2).

2. Process according to claim 1, characterized in that the excess quantity of adhesive is trapped towards the outer flange (5b, 6b) of the structural section (4s, 4i).

3. Process according to one of claims 1 or 2, characterized in that the excess quantity of adhesive is trapped on the inner flange (5c, 6c) side near the free end of said flange.

4. Structural section for right-angle assembly of two panels with a view to producing a vehicle body, for use in carrying out the process according to one of claims 1 to 3, comprising two similar U-section grooves (5, 6) which are oriented so as to form an angle of 90° one with respect to the other, each one being designed to receive the edge of one of the two panels (1, 3 ; 2, 3) to be assembled, each one being delimited by a bottom plane (5a, 6a) and by two flanges (5b, 5c and 6b, 6c) which are fast with the structural section (4i, 4s), parallel together and perpendicular to said bottom (5a, 6a), spaced apart one from the other of a distance equal to or slightly greater than the thickness of the panel engageable therein and comprising a stiffening brace (7s, 7i) connecting the bottoms (5a, 6a) of the two grooves (5, 6) to the outside of the latter, characterized in that at least one of the two flanges (5b, 5c, 6b, 6c) delimiting one of the two grooves (5, 6) of the structural section (4i, 4s) comprises on its inner face and near its free end a longitudinal channel (10) parallel to said groove (5, 6) and serving as a trap for the adhesive, and in that the stiffening brace (7s, 7i) has a tubular part (8) extending in parallel to the grooves (5, 6) and forming a channel of circular section opening towards the outside of the structural section (4i, 4s) via a narrow rectilinear slot (9) parallel to said grooves (5, 6).

5. Structural section according to claim 4, characterized in that the free ends of the inner flanges (5c, 6c) are provided with longitudinal borders (11) folded in and oriented towards each other in a same transverse plane.

6. Structural section according to claim 5, characterized in that the opening remaining between the two longitudinal borders (11) is covered by a rigid or semi-rigid strip or blade (12) serving to hide the volume defined between said flanges (5c, 6c) and said borders (11).

7. Structural section according to one of claims 4 to 6, characterized in that the bottom plane (6a) of one of the grooves is comprised between the planes of the flanges (5b, 5c) of the other groove.

8. Structural section according to claim 7, characterized in that the plane of one of the flanges of the groove (6) whose bottom (6a) has its plane comprised between the planes of the flanges (5b, 5c) of the other groove (5) is confused with the plane of the bottom (5a) of said other groove.

9. Structural section according to one of claims 4 to 6, characterized in that the plane of one of the flanges (5c, 6c) of each groove (5, 6) coincides with the bottom plane (6a, 5a) of the other groove (6, 5) and that said flange (5c, 6c) of each groove extends from the bottom (6a, 5a) of the other groove.

10. Structural section according to one of claims 4 to 9, characterized in that the brace (7s) extends, at least partly, crosswise in a straight or curve line with respect to the planes of the flanges of the grooves (5, 6).

11. Structural section according to one of claims 4 to 10, characterized in that the brace (7i) extends, at least partly, in the plane of one of the flanges of one of the grooves.

12. Structural section according to any one of claims 4 to 11, characterized in that the space (14) comprised between the two bottoms (5a, 6a) and the brace (7s, 7i) is filled with a heat-insulating material.

13. Structural section according to any one of claims 4 to 12, characterized in that the two flanges (5c, 6c) which, respectively belonging to either one of the grooves (5, 6), are contiguous, are arranged so as to enable fixing of various elements to the structural section (4i, 4s).

Fig.1

Fig. 2